Europäisches Patentamt

European Patent Office

Office européen des brevets

(19)

(11) **EP 1 252 757 B1**

(12) **EUROPÄISCHE PATENTSCHRIFT**

(45) Veröffentlichungstag und Bekanntmachung des Hinweises auf die Patenterteilung:
**04.06.2003 Patentblatt 2003/23**

(51) Int Cl.$^7$: **H04N 1/60**

(86) Internationale Anmeldenummer:
**PCT/EP00/12571**

(21) Anmeldenummer: **00988785.2**

(22) Anmeldetag: **12.12.2000**

(87) Internationale Veröffentlichungsnummer:
**WO 01/052522 (19.07.2001 Gazette 2001/29)**

(54) **VERFAHREN UND VORRICHTUNG ZUR VERÄNDERUNG DER FARBSÄTTIGUNG ELEKTRONISCH ERFASSTER BILDER**

METHOD AND DEVICE FOR MODIFYING THE COLOR INTENSITY OF ELECTRONICALLY ACQUIRED IMAGES

PROCEDE ET DISPOSITIF DE MODIFICATION DE LA SATURATION CHROMATIQUE D'IMAGES SAISIES ELECTRONIQUEMENT

(84) Benannte Vertragsstaaten:
**DE GB**

(30) Priorität: **11.01.2000 DE 10000779**

(43) Veröffentlichungstag der Anmeldung:
**30.10.2002 Patentblatt 2002/44**

(73) Patentinhaber: **INSTITUT FÜR MIKROELEKTRONIK STUTTGART 70569 Stuttgart (DE)**

(72) Erfinder:
• **HÖFFLINGER, Bernd 71063 Sindelfingen (DE)**

• **GRAF, Heinz, Gerhard 71106 Magstadt (DE)**

(74) Vertreter: **Duhme, Torsten et al Witte, Weller & Partner, Patentanwälte, Postfach 10 54 62 70047 Stuttgart (DE)**

(56) Entgegenhaltungen:
**WO-A-96/08915        DE-A- 3 629 403 US-A- 5 517 335**

EP 1 252 757 B1

**Beschreibung**

Die Erfindung betrifft ein Verfahren zur Transformation von durch farbliche Filterung gewonnenen und logarithmisch komprimierten Bildsignalen, bei dem die Farbsättigung der aufgenommenen Bilder verändert wird. Die Erfindung betrifft ferner eine Sättigungsstufe zur Durchführung des Verfahrens sowie eine digitale Kamera mit einer solchen Sättigungsstufe.

In der Foto- und Filmkameratechnik werden als Ersatz für herkömmliches Filmmaterial in zunehmendem Maße elektronische Bildaufnehmer eingesetzt, die eine optische Intensitätsverteilung in elektronische Bildsignale umwandeln. Derartige Bildaufnehmer weisen eine regelmäßige Anordnung von Bildpunkten ("Pixeln") auf, denen jeweils eine oder mehrere lichtempfindliche, im folgenden als Bildzellen bezeichnete Schaltungen aus Halbleiterbauelementen zugeordnet sind. Jede dieser Bildzellen erzeugt ein Bildsignal, dessen Spannungswert eine Funktion der Intensität des auf die Bildzelle auftreffenden Lichts ist.

Bei Bildaufnehmern für die farbige Wiedergabe besteht jeder Bildpunkt in der Regel aus einem Tripel von Bildzellen, die jeweils durch ein Farbfilter für eine der drei Spektralfarben Rot, Grün und Blau überdeckt sind. Jedes Signal einer solchen Bildzelle gibt einen auf die betreffende Spektralfarbe bezogenen Helligkeitswert wieder, so daß in der Gesamtheit der drei Einzelsignale die Farbinformation für den betreffenden Bildpunkt enthalten ist.

Betrachtet man ein durch derartige Bildsignale repräsentiertes Bild unmittelbar auf einem Monitor, so weicht das Ergebnis in der Regel mehr oder weniger deutlich von dem tatsächlichen Seheindruck ab, den ein Mensch durch unmittelbare Betrachtung des aufgenommenen Motivs gewinnt. Daher werden die Bildsignale in der Regel digitalisiert und in digitalen Signalprozessoren unterschiedlichen Transformationen unterworfen, um die aufgenommenen Bilder an den tatsächlichen Seheindruck anzupassen.

Mit Hilfe derartiger Transformationen lassen sich beispielsweise Farbstiche entfernen (Farbtransformationen) oder aufgenommene Bilder insgesamt aufhellen oder abdunkeln (Helligkeitstransformationen). Ferner ist es möglich, die Farbsättigung derartiger elektronischer Bilder zu verändern. Unter der Sättigung einer Farbe wird begrifflich der Unterschied zwischen der Farbe und einem Grauwert gleicher Helligkeit verstanden. Schwach gesättigte Farben sind daher blaß oder sogar gräulich, während stark gesättigte Farben kräftig und brillant wirken.

Bei der Beschreibung derartiger Transformationen geht man meist vom sog. RGB-Farbmodell aus, da dieses der Funktionsweise von Bildaufnehmern und Farbmonitoren weitgehend entspricht. Sowohl im RGB-Farbmodell als auch bei Bildaufnehmern und Farbmonitoren werden nämlich Farben durch Anteile der drei Spektralfarben Rot, Grün und Blau wiedergeben, die im Farbmodell jeweils Werte zwischen 0 und 1 annehmen können. Auf diese Weise läßt sich die Gesamtheit der darstellbaren Farben in einem Einheitswürfel darstellen, der von einem Koordinatensystem aufgespannt wird, auf dessen Achsen die drei Farbanteile aufgetragen sind. Sind die Anteile der drei Primärfarben gleich groß, was einem Punkt auf einer Raumdiagonalen des Einheitswürfels entspricht, so erhält man einen reinen Grauwert. Bei einer schwach gesättigten Farbe liegt der diese Farbe repräsentierende Punkt in der Nähe dieser Raumdiagonalen, d.h. die Anteile der Spektralfarben weichen nur geringfügig voneinander ab.

Aus einem Aufsatz von Paul Haeberli aus dem Jahre 1993, der im Internet unter der Adresse http://wwp.sgi.com/graphica/matrix/index.html veröffentlicht ist, ist eine Transformation zur Sättigung von RGB-Farben bekannt. Wenn R ein Bildsignal für die Spektralfarbe Rot an einem bestimmten Bildpunkt bezeichnet, so ergibt sich nach der dort beschriebenen Transformation das transformierte Bildsignal R' aus der Gleichung

$$R' = \alpha \cdot (R - L) + L,$$

wobei L einen Helligkeitswert für den betreffenden Bildpunkt und $\alpha$ einen Sättigungsfaktor bezeichnet. Bezüglich der transformierten Bildsignale G' und B' für die Spektralfarbe Grün bzw. Blau gelten entsprechende Gleichungen, wobei der Sättigungsfaktor a sowie der Helligkeitswert L für alle Spektralfarben eines Bildpunktes gleich sind. Der Helligkeitswert L wird dabei nach der Gleichung

$$L' = R \cdot W_R + G \cdot W_G + B \cdot W_B$$

bestimmt, wobei

$W_R = 0, 3086,$
$W_G = 0, 6094$ und
$W_B = 0,0820$

beträgt. Wird der Sättigungsfaktor a kleiner als 1 gewählt, so führt dies zu einer Absenkung der Farbsättigung. Sättigungsfaktoren $\alpha$, die größer sind als 1, ergeben stärker gesättigte Farben.

In dem Aufsatz wird ferner darauf hingewiesen, daß diese Transformation nur dann zu korrekten Ergebnissen führt, wenn die Bildsignale R, G und B linear sind. Lineare Bildsignale zeichnen sich dadurch aus, daß zwischen dem Spannungswert eines solchen Bildsignales und der optischen Intensität, die auf den betreffenden Bildpunkt auftrifft, eine lineare Beziehung besteht. Dies ist beispielsweise bei den insbesondere in Videokameras häufig verwendeten Bildaufnehmern in CCD-Technik (CCD = charge coupled device) der Fall. Handelt es sich hingegen nicht um lineare Bildsignale, so müssen nach Haeberli diese zuerst in lineare Signale umgewandelt werden, bevor die vorstehend beschriebene Transformation zur Veränderung der Farbsättigung durchgeführt werden kann.

Aus der EP-B-0 632 930 ist ein Bildaufnehmer bekannt, der eine hohe Eingangssignaldynamik logarithmisch auf eine erheblich kleinere Ausgangssignaldynamik komprimiert. Jeder Bildpunkt dieses bekannten Bildaufnehmers erzeugt somit eine Ausgangsspannung, die dem Logarithmus der darauf auftreffenden optischen Intensität entspricht. Damit läßt sich die extrem hohe Bestrahlungsstärke-Dynamik natürlicher Szenen, die in der Größenordnung von 120 dB liegt, signaltechnisch erfassen. Mit einem derartigen Bildaufnehmer können somit Bilder elektronisch erfaßt werden, deren Helligkeitsdynamik dem tatsächlichen Sehempfinden des Menschen äußerst nahe kommt. Dies liegt vor allem daran, daß auch das menschliche Auge eine annähernd logarithmische Sehempfindlichkeit besitzt.

Während diese logarithmisch komprimierten Bildsignale eine Helligkeitsdynamik von etwa 120 dB wiedergeben, sind die absoluten Differenzen zwischen den Bildsignalen der einzelnen Spektralfarben jedoch vergleichsweise gering. Dies führt dazu, daß die mit dem bekannten Bildaufnehmer aufgenommenen Bilder häufig eine nicht ausreichende Farbsättigung aufweisen. Es erscheint daher möglich, der in dem o.a. Aufsatz von P. Haeberli ausgesprochenen Anregung zu folgen und die logarithmisch komprimierten Bildsignale nach einer Digitalisierung zunächst wieder zu linearisieren, dann in der dort beschriebenen Weise zu transformieren und anschließend wieder zu logarithmieren. Es ist jedoch offensichtlich, daß eine derartige Linearisierung (d.h. Entlogarithmisierung) und anschließende Logarithmisierung der Bildsignale rechentechnisch sehr aufwendig und daher nur mit teuren digitalen Signalprozessoren zu bewältigen ist.

Es ist daher Aufgabe der Erfindung, ein Verfahren der eingangs genannten Art anzugeben, welches eine Veränderung der Farbsättigung auf möglichst einfache Weise gestattet.

Es ist ferner Aufgabe der Erfindung, eine Sättigungsstufe zur möglichst einfachen Veränderung der Farbsättigung von Bildern anzugeben, mit der durch farbliche Filterung gewonnene und logarithmisch komprimierte Bildsignale transformierbar sind.

Diese Aufgabe wird erfindungsgemäß bei einem Verfahren der eingangs genannten Art dadurch gelöst, daß zumindest für eine Spektralfarbe die transformierten Bildsignale als Funktion der logarithmisch komprimierten Bildsignale und logarithmisch komprimierter Helligkeitssignale ermittelt werden.

Hinsichtlich einer Sättigungsstufe wird die Aufgabe durch Rechenmittel gelöst, mit denen für zumindest eine Spektralfarbe die transformierten Bildsignale als Funktion der logarithmisch komprimierten Bildsignale und logarithmisch komprimierter Helligkeitssignale ermittelbar sind.

Es hat sich gezeigt, daß entgegen dem oben erwähnten Vorurteil eine unmittelbar auf der Grundlage logarithmisch komprimierter Bildsignale durchgeführte Transformation zu hervorragenden Ergebnissen bei der Verbesserung der Farbsättigung führt. Voraussetzung hierfür ist lediglich, daß in die Transformation auch logarithmisch komprimierte Helligkeitssignale eingehen. Die für lineare Bildsignale bekannten Transformationen lassen sich damit im wesentlichen übernehmen, und zwar überraschenderweise ohne entsprechende Logarithmierung der Transformationsgleichungen. So bleibt z.B. eine Rechenoperation für lineare Signale, bei der ein lineares Signal S mit einem Faktor k multipliziert wird, bei einem logarithmisch komprimierten Signal S' weiterhin eine Multiplikation mit k (oder einem Wert k'). Die Multiplikation mit k wird also nicht logarithmiert, d. h. in eine Addition von log k umgewandelt.

Für einen bestimmten Bildpunkt kann das logarithmisch komprimierte Helligkeitssignal beispielsweise von einer zusätzlichen Bildzelle bereitgestellt werden, die farblich ungefiltertes Licht aufnimmt und daher ein reines Helligkeitssignal für diesen Bildpunkt liefert. Ebenso ist es natürlich möglich, das logarithmisch komprimierte Helligkeitssignal für den betreffenden Bildpunkt unter Verwendung der - gegebenenfalls in geeigneter Weise gewichteten - logarithmisch komprimierten Bildsignale für die drei Spektralfarben zu ermitteln. Außerdem ist es möglich, das Helligkeitssignal für einen bestimmten Bildpunkt auch unter Verwendung von Bildsignalen eines oder mehrerer benachbarter Bildpunkte zu bestimmen.

Besonders vorteilhaft ist es, wenn das logarithmisch komprimierte Helligkeitssignal für einen einzelnen Bildpunkt gleich dem arithmetischen Mittel der unterschiedlichen Spektralfarben zugeordneten Bildsignale des betreffenden Bildpunktes ist.

Diese rechentechnisch sehr einfach durchführbare Ermittlung eines Helligkeitssignals führt zu überraschend guten Ergebnissen bei der Veränderung der Farbsättigung, wenn erfindungsgemäß unmittelbar logarithmisch komprimierte Bildsignale und logarithmisch komprimierte Helligkeitssignale in die Transformation eingehen. Die Mittelwertbildung kann auch analog, d.h. vor einer Digitalisierung der Bildsignale, erfolgen, was die Verwendung rein analoger Schaltungsbauelemente erlaubt.

Bei einer bevorzugten Ausgestaltung der Erfindung werden die transformierten Bildsignale $L_c'$ aus den Bildsignalen $L_c$ für die zumindest eine Spektralfarbe c nach der Gleichung

$$L_c' = \alpha_c \cdot (L_c - L) + L$$

bestimmt, wobei $\alpha_c$ ein Sättigungsfaktor für die Spektralfarbe c und L ein logarithmisch komprimiertes Helligkeitssignal ist.

Die Differenz zwischen dem Bildsignal $L_c$ einer Spektralfarbe und dem Helligkeitswert L an dem betreffenden Bildpunkt stellt dabei den eigentlichen Farbanteil dar, der durch den Sättigungsfaktor $\alpha_c$ verstärkt wird, sofern $\alpha_c$ größer als 1 gewählt wird. Im Gegensatz zu bekannten Transformationen, bei denen der Sättigungsfaktor für alle Spektralfarben identisch ist, können bei dieser Ausgestaltung der Erfindung auch unterschiedliche Sättigungsfaktoren $\alpha_c$ für die einzelnen Spektralfarben c gewählt werden. Auf diese Weise läßt sich die Farbsättigung derart gezielt erhöhen, daß ein äußerst realistischer, den normalen Sehgewohnheiten entsprechender Bildeindruck erzielbar ist.

Sofern die Verstärkungsfaktoren $\alpha_c$ für die Spektralfarben c konstant sind, handelt es sich bei der vorstehenden Transformation um eine lineare Transformation, die rechentechnisch besonders einfach durchführbar ist.

Eine noch realitätsgetreuere Erhöhung der Farbsättigung läßt sich in vielen Fällen aber dann erzielen, wenn die Sättigungsfaktoren $\alpha_c$ abhängig von einem Kontrastfaktor $\gamma$ sind, mit dem die logarithmisch komprimierten Bildsignale vor der Transformation im Rahmen einer $\gamma$-Korrektur multipliziert werden.

Die an sich bekannte $\gamma$-Korrektur, die bei linearen Bildsignalen einer Exponentialoperation mit einem Kontrastfaktor $\gamma$ entspricht, stellt sich bei logarithmischen Bildsignalen als Multiplikation mit dem Kontrastfaktor $\gamma$ dar. Die $\gamma$-Korrektur führt auch bei logarithmischen Bildsignalen zu einer Änderung des Kontrastes, d.h. der absoluten Helligkeitsdifferenz zwischen zwei benachbarten Bildpunkten. Dies wirkt sich auch auf die Farbsättigung aus, so daß in vielen Fällen eine Anpassung der Sättigungsfaktoren an den Wert der Verstärkung zu besseren Ergebnissen führt.

Besonders bevorzugt ist es dabei, wenn die Sättigungsfaktoren $\alpha_c$ mit zunehmendem Kontrastfaktor $\gamma$ abnehmen.

Eine höhere Verstärkung und damit ein höherer Kontrast führen nämlich zu einer verringerten Helligkeitsdynamik und erfordern daher auch eine geringere Verstärkung der Farbsättigung.

Bei einer vorteilhaften Ausgestaltung der Erfindung ist es bevorzugt, daß der Zusammenhang zwischen den Sättigungsfaktoren $\alpha_c$ und dem Kontrastfaktor $\gamma$ durch eine stückweise lineare und monoton fallende Funktion beschrieben wird.

Auf diese Weise läßt sich auf rechentechnisch einfache Weise eine sehr gute Anpassung der Farbsättigung an die Verstärkung vornehmen.

Alternativ oder auch zusätzlich zu einer Abhängigkeit von einem Verstärkungsfaktor können die Sättigungsfaktoren $\alpha_c$ abhängig sein von den logarithmisch komprimierten Helligkeitssignalen.

Dadurch wird der Tatsache Rechnung getragen, daß das Sehempfinden des Menschen im Dunkeln kaum noch Farbunterschiede ausmachen kann, so daß hier eine Erhöhung der Farbsättigung entbehrlich ist. Bei hohen Helligkeiten hingegen werden Farben zunehmend als blasser empfunden, weswegen dort eine Erhöhung der Farbsättigung um so wichtiger ist. Vorzugsweise ist der Sättigungsfaktor $\alpha_c$ für einen bestimmten Bildpunkt daher eine monoton zunehmende Funktion des für diesen Bildpunkt ermittelten logarithmisch komprimierten Helligkeitssignales.

Besonders bevorzugt ist es dabei, wenn die Sättigungsfaktoren $\alpha_c$ proportional zu den logarithmisch komprimierten Helligkeitssignalen sind.

Dadurch läßt sich die Verstärkung der Farbsättigung auf rechentechnisch einfache Weise sehr gut an die Helligkeit anpassen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Merkmale der Erfindung ergeben sich aus der Beschreibung der nachfolgenden Ausführungsbeispiele anhand der Zeichnung. Darin zeigen:

Fig. 1    eine stark schematisierte Darstellung einer Kamera mit einem darin eingebauten Bildaufnehmer;

Fig. 2    ein Prinzipschaltbild einer Elektronikeinheit zur Weiterverarbeitung von Bildsignalen, die von dem in Fig. 1 dargestellten Bildaufnehmer erzeugt worden sind;

Fig. 3    einen Farbwürfel zur Erläuterung des RGB-Farbmodells;

Fig. 4    eine schematische Darstellung des Wertebereichs von untransformierten Bildsignalen im Farbwürfel;

Fig. 5    eine schematische Darstellung des Wertebereichs von transformierten Bildsignalen im Farbwürfel, wobei die Sättigungsfaktoren nicht von der Helligkeit abhängen;

Fig. 6    eine schematische Darstellung des Wertebereichs von transformierten Bildsignalen im Farbwürfel, wobei die Sättigungsfaktoren von der Helligkeit abhängen;

Fig. 7    einen Graphen, in dem ein Sättigungsfaktor über einem Verstärkungsfaktor aufgetragen ist;

Fig. 8    eine stark schematisierte Darstellung einer Sättigungseinrichtung zur Durchführung der erfindungsgemäßen Transformation.

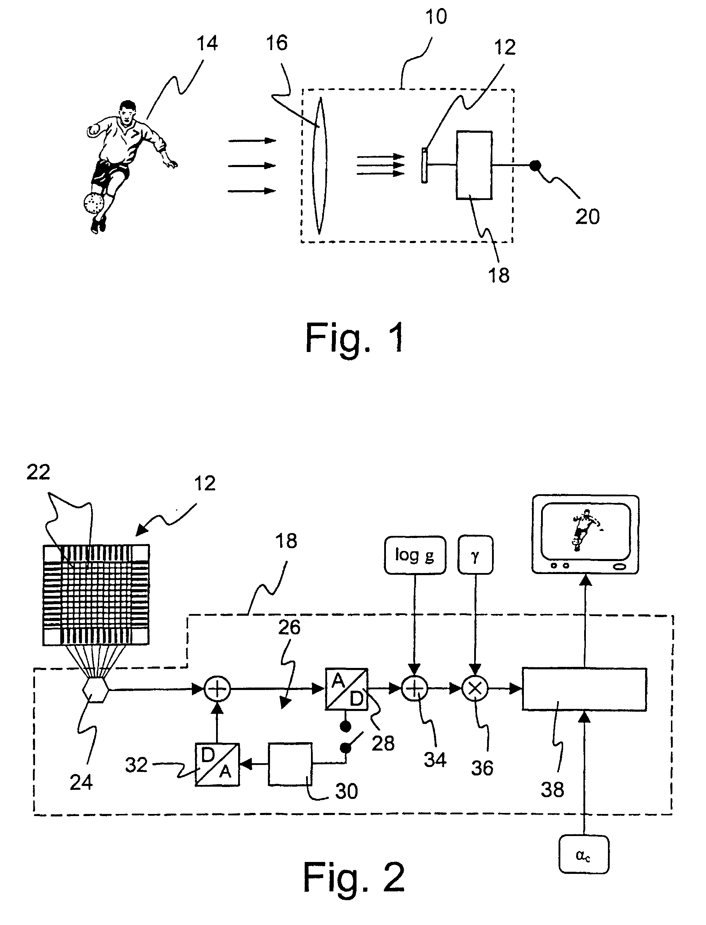

Fig. 1 zeigt in einer stark vereinfachten schematischen Darstellung eine Digitalkamera 10, bei der es sich um eine Fotooder auch um eine Filmkamera handeln kann. Die Digitalkamera 10 weist einen elektronischen Bildaufnehmer 12 auf, auf dessen lichtempfindliche Oberfläche ein Motiv 14 mit Hilfe eines hier nur angedeuteten Linsensystems 16 abgebildet wird. In einer Elektronikeinheit 18 werden die von dem Bildaufnehmer 12 aufgenommenen Bilder digital weiterverarbeitet, so daß sie schließlich über einen Kameraausgang 20 ausgelesen werden können. Der Elektronikeinheit 18 kann ein - in Fig. 1 nicht dargestellter - Bildspeicher zugeordnet sein, in dem die aufbereiteten Bilder gespeichert werden können. Außerdem ist es möglich, nur einen Teil der Elektronikeinheit 18 innerhalb der Digitalkamera 10 anzuordnen. Die übrigen Teile sind dann außerhalb der Digitalkamera 10 z.B. als eine auf einem Personalcomputer ausführbare Software realisiert.

In Fig. 2 ist der Bildaufnehmer 12 sowie die Elektronikeinheit 18 mit weiteren Einzelheiten dargestellt. Der Bildaufnehmer 12 weist eine regelmäßige Anordnung von Bildpunkten 22 auf, die in an sich bekannter Weise jeweils drei lichtempfindliche Bildzellen aufweisen, die von unterschiedlichen Farbfiltern abgedeckt werden. Jede Bildzelle eines Bildpunkts erzeugt eine Ausgangsspannung, die eine Funktion der Intensität des Lichts derjenigen Spektralfarbe ist, die durch das dieser Bildzelle zugeordnete Filter hindurchtreten kann. In jedem Bildpunkt 22 werden somit drei voneinander unabhängige Bildsignale erzeugt, die jeweils einer der drei Spektralfarben Rot, Grün und Blau zugeordnet sind. Die im Bildaufnehmer 12 verwendeten Bildzellen sind dabei als Schaltungen von Halbleiterbauelementen realisiert, bei denen der funktionale Zusammenhang zwischen der Ausgangsspannung und der Intensität des auftreffenden Lichtes logarithmisch ist. Die Bildzellen erzeugen daher logarithmisch komprimierte Bildsignale. Einzelheiten zum Aufbau derartiger Bildzellen sind der zuvor erwähnten EP-B-0 632 930 entnehmbar.

Die an den Bildpunkten 22 erzeugten Bildsignale werden zeilenund spaltenweise ausgelesen und in einem Multiplexer 24 zu einem Gesamtsignal zusammengestellt. Das Gesamtsignal enthält somit in zeitlicher Abfolge die den einzelnen Bildpunkten 22 zugeordneten Bildsignale. Im folgenden beziehen sich deswegen Ausführungen zu Bildsignalen immer auch auf das entsprechende Gesamtsignal und umgekehrt, soweit sich aus dem Zusammenhang nicht ein anderes ergibt.

Das Gesamtsignal wird anschließend in einer Offset-Schaltung 26 derart aufbereitet, daß Schwankungen der Eigenschaften der einzelnen Bildzellen, insbesondere die Schwellenspannungen der darin enthaltenen Fototransistoren, ausgeglichen werden. Bei diesem auch als Weißabgleich bezeichneten Vorgang, der nur ein einziges Mal durchgeführt zu werden braucht, wird das Gesamtsignal zunächst in einem ersten Analog/Digital-Wandler 28 digitalisiert, wobei als aufzunehmendes Motiv eine gleichmäßige Farbfläche, z.B. eine Weißfläche, gewählt wird. Dieses Bild, ein invertiertes Bild oder ein Differenzbild, wird in einem Speicher 30 gespeichert, so daß es bei den nachfolgenden Aufnahmen stets zur Verfügung steht. Das im Speicher 30 gespeicherte Bild wird dann in einem Digital/Analog-Wandler 32 zurück in ein Analogsignal verwandelt und dem vom Multiplexer 24 stammenden analogen Gesamtsignal überlagert.

Das in der Offset-Schaltung 26 abgeglichene Gesamtsignal wird nun in der Helligkeit geregelt. Dies erfolgt durch eine Addition des Wertes log g in einem Addierer 34. Die Addition des Wertes log g entspricht der Verstärkung des Gesamtsignals um den Faktor g, die bei linearen Bildaufnehmern, z.B. CCD-Sensoren, die Anpassung der Helligkeit bewirkt.

Das verstärkte Gesamtsignal wird anschließend einer $\gamma$-Korrektur unterworfen, durch die u.a. der Kontrast des aufgenommenen Bildes verändert wird bzw. Verzerrungen der Bildsignale ausgeglichen werden. Die in einem linearen Signalraum durch eine Exponentialoperation realisierte $\gamma$-Korrektur stellt sich in einem logarithmischen Bildsignalraum als einfache Multiplikation mit dem Konstrastfaktor $\gamma$ dar. Der hierzu vorgesehene Multiplikator 36 kann daher als einfacher Bit-Shifter ausgeführt sein, wenn man die vom Kontrastfaktor $\gamma$ annehmbaren Werte auf Zweierpotenzen beschränkt.

Das verstärkte und korrigierte Gesamtsignal wird anschließend einer Sättigungsstufe 38 zugeführt, in der die Farbsättigung des aufgenommenen Bildes gezielt verändert, insbesondere erhöht, werden kann. Der Sättigungsstufe 38 können zu diesem Zweck von einer Steuerungseinheit oder unmittelbar von einem Benutzer Sättigungsfaktoren $\alpha_C$ zugeführt werden, die festlegen, auf welche Weise die Farbsättigung in der Sättigungsstufe 38 verändert wird.

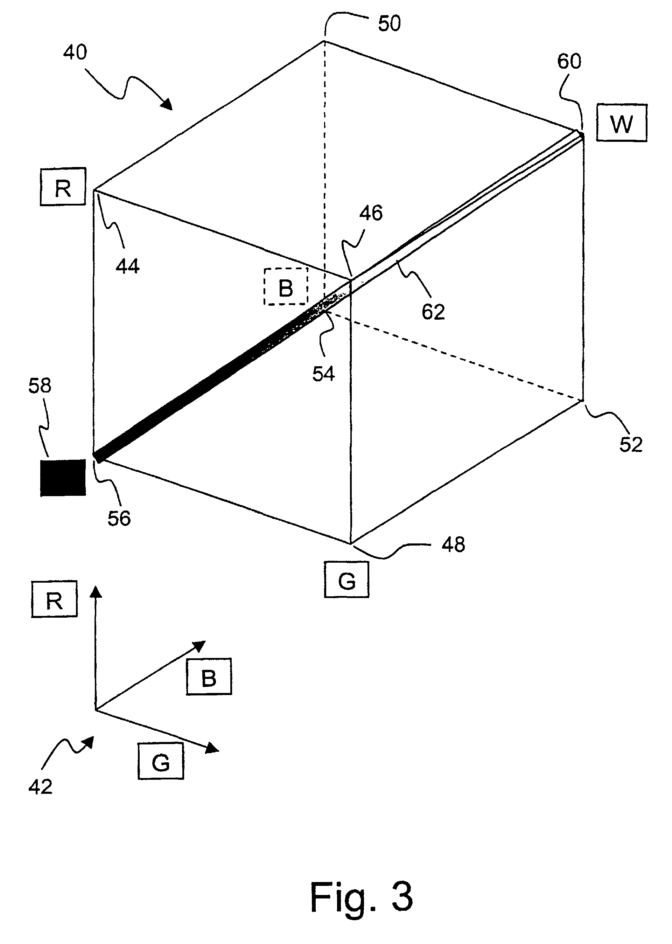

Die in der Sättigungsstufe 38 vorgenommene Transformation des Gesamtsignals wird nachfolgend anhand der Figuren 3 bis 7 näher erläutert.

Fig. 3, die lediglich zur Erläuterung des RGB-Farbmodells dient, zeigt einen Farbwürfel 40, der zur Darstellung von Farben in diesem Modell verwendet wird. Der Farbwürfel 40 wird von einem Dreibein 42 aufgespannt, welches unterhalb des Farbwürfeis 40 verkleinert dargestellt ist. Durch das Dreibein 42 wird ein Koordinatensystem festgelegt, auf dessen Achsen die Farbanteile für die Spektralfarben Rot, Grün und Blau aufgetragen sind. Zur Bezeichnung der Spektralfarben dienen in der Zeichnung eingerahmte Großbuchstaben R, G bzw. B. Jede Farbe ist durch eine Mischung dieser drei Spektralfarben Rot, Grün und Blau darstellbar, wobei der Farbton durch das Verhältnis der Anteile dieser drei Spektralfarben und die Helligkeit durch die Absolutwerte festgelegt wird. Die Anteile können jeweils Werte zwischen 0 und 1 annehmen, so daß jede Farbe durch einen Punkt im Farbwürfel 40 wiedergegeben wird.

Die mit 44 bezeichnete Ecke des Farbwürfels 40 entspricht z.B. einem reinen Rot maximaler Helligkeit, da die Farbanteile für die Spektralfarben Grün und Blau jeweils 0 sind. Der durch die Ecke 46 des Farbwürfels 40 wiedergegebene Punkt repräsentiert die Farbe Gelb maximaler Helligkeit, da an diesem Punkt der Farbanteil der Farben Rot und Grün jeweils 1 beträgt, was zur Mischfarbe Gelb führt. Die Ecke 48 entspricht der Farbe Grün, die Ecke 50 der Farbe Magenta, die Ecke 52 der Farbe Cyan und die Ecke 54 der Farbe Blau.

In der Ecke 56 des Farbwürfels 40, die den Ursprung des Dreibeins 42 bildet, betragen die Farbanteile jeweils 0. Dies entspricht der Farbe Schwarz, die durch das schwarze Viereck 58 in Fig. 3 angedeutet ist. Die raumdiagonal gegenüberliegende Ecke 60 ist dadurch gekennzeichnet, daß dort die Anteile der drei Spektralfarben Rot, Grün und Blau jeweils 1 betragen. Dieser maximale Farbwert führt zur Mischfarbe Weiß, was durch den eingerahmten Buchstaben W angedeutet ist. Die auf der Raumdiagonale zwischen den Ecken 56 und 60 liegenden Punkte zeichnen sich dadurch aus, daß auch dort die Farbanteile jeweils identisch sind. Folglich repräsentiert die Raumdiagonale 62 sämtliche Grauwerte, deren Helligkeit von der Ecke 56 (Schwarz) bis zur gegenüberliegenden Ecke 60 (Weiß) kontinuierlich zunimmt. In Fig. 3 ist diese Raumdiagonale mit 62 bezeichnet und verbreitert dargestellt, um die Grauwerte darstellen zu können.

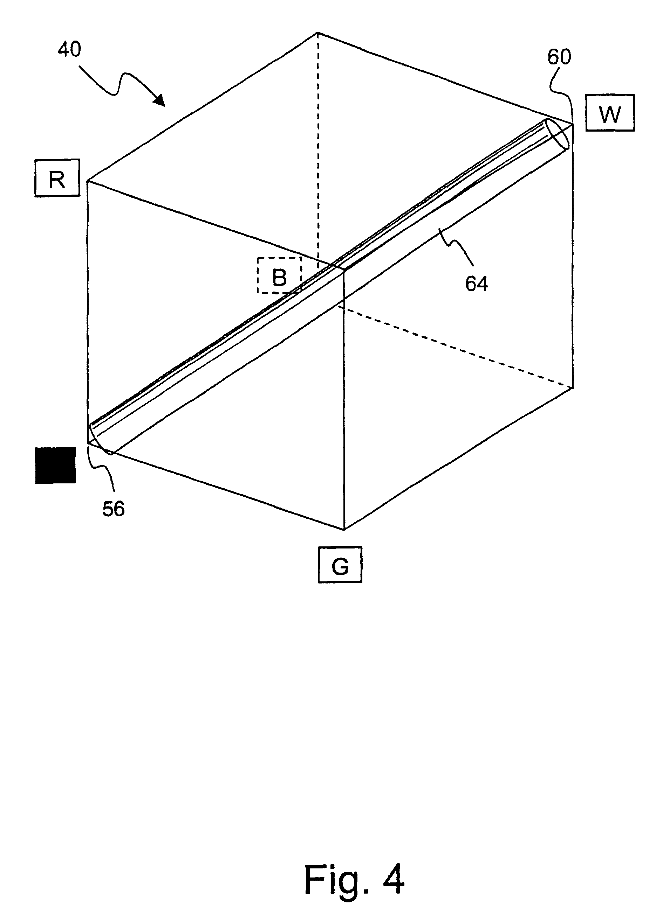

Fig. 4 zeigt den Farbwürfel 40 aus Fig. 3, wobei anstelle der Raumdiagonalen 62 ein konzentrisch hierzu angeordneter Zylinder 64 eingezeichnet ist. Der Zylinder 64 deutet den Wertebereich an, den die Bildsignale annehmen können, bevor sie zur Erhöhung der Farbsättigung in der Sättigungsstufe 38 der erfindungsgemäßen Transformation unterworfen werden. Durch den konzentrisch zur Raumdiagonalen 62 angeordneten Zylinder 64 wird deutlich, daß die durch die Bildsignale wiedergegebenen Farbwerte relativ nahe beieinander liegen, d.h. sich in der Nähe der Raumdiagonalen 62 befinden. Dies bedeutet, daß die aufgenommenen Bilder relativ gräulich sind, d.h. eine geringe Farbsättigung aufweisen.

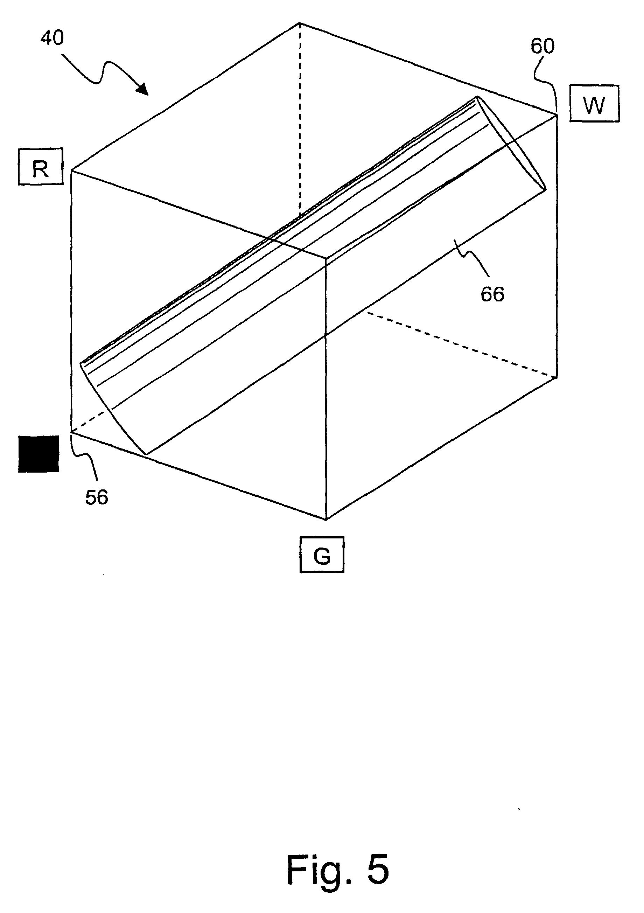

In Fig. 5 ist ebenfalls ein Farbwürfel 40 gezeigt, in dem ein anderer Zylinder 66 konzentrisch zur Raumdiagonalen zwischen den Ecken 56 und 60 eingezeichnet ist. Der Zylinder 66 gibt den Wertebereich der transformierten Bildsignale wieder. Wie durch diese schematische Darstellung unmittelbar erkennbar ist, können die transformierten Bildsignale einen wesentlich größeren Wertebereich innerhalb des Farbwürfels 40 einnehmen. Die Farbwerte haben im Mittel einen größeren Abstand von der die Grauwerte wiedergebenden Raumdiagonalen zwischen den Ecken 56 und 60, was einer höheren Farbsättigung entspricht.

Die transformierten Bildsignale R', G' und B' für die Farben Rot, Grün bzw. Blau sind dabei nach den Transformationsgleichungen

$$R' = \alpha_R \cdot (R\text{-}L) + L$$

$$G' = \alpha_G \cdot (G\text{-}L) + L$$

$$B' = \alpha_B \cdot (B\text{-}L) + L$$

aus den logarithmisch komprimierten Bildsignalen R, G und B abgeleitet, für die folgende Proportionalität gilt:

$$R \sim \gamma\,(\log I_R + \log g)$$

$$G \sim \gamma\,(\log I_G + \log g)$$

$$B \sim \gamma(\log I_B + \log g)$$

Dabei bezeichnet g den Verstärkungsfaktor, dessen Logarithmus im Addierer 34 den Bildsignalen hinzugefügt wurde. Die Größen $I_R$, $I_G$ und $I_B$ sind die spektral gefilterten Beleuchtungsstärken, die an den einzelnen Bildzellen eines Bildpunktes auftreten.

Die Helligkeitssignale L werden für jeden einzelnen Bildpunkt durch arithmetische Mittelung der den einzelnen Spektralfarben zugeordneten Bildsignale ermittelt, d.h. für das Helligkeitssignal L gilt

$$L = \frac{1}{3} \cdot (R + G + B).$$

Eine Verstärkung der Farbsättigung ergibt sich dabei nur bei Sättigungsfaktoren, die größer sind als 1. Sind alle Sättigungsfaktoren $\alpha_R$, $\alpha_G$ und $\alpha_B$ gleich 1, so bleibt die Farbsättigung unverändert; sind diese Sättigungsfaktoren hingegen kleiner als 1, so nimmt die Farbsättigung ab, bis schließlich (alle Sättigungsfaktoren = 0) ein reines Grauwertbild entsteht.

Bei der in Fig. 5 schematisch angedeuteten Transformation sind die Sättigungsfaktoren $\alpha_R$, $\alpha_G$ und $\alpha_B$ identisch, wodurch die Werte für die transformierten Bildsignale innerhalb eines Kreiszylinders liegen. Werden diese Sättigungsfaktoren unterschiedlich gewählt, so führt dies zu Zylindern mit elliptischen Grundflächen. Die Wahl der Sättigungsfaktoren $\alpha_R$, $\alpha_G$ und $\alpha_B$ ermöglicht es somit, bei der Erhöhung der Farbsättigung zusätzliche farbliche Akzentuierungen zu erzeugen, durch die die aufgenommenen Bilder noch besser an den tatsächlichen Seheindruck angepaßt werden können.

Außerdem sind bei der in Fig. 5 gezeigten Transformation die Sättigungsfaktoren $\alpha_R$, $\alpha_G$ und $\alpha_B$ Konstanten, die von einem Benutzer der Digitalkamera 10 festgelegt sein können, aber nicht von weiteren Größen abhängen. Dies bedeutet, daß die o.a. Gleichungen für die transformierten Bildsignale R', G' und B' linear sind. Es ist jedoch ebenso möglich, die Sättigungsfaktoren $\alpha_R$, $\alpha_G$ und $\alpha_B$ funktional von anderen Größen abhängig zu machen.

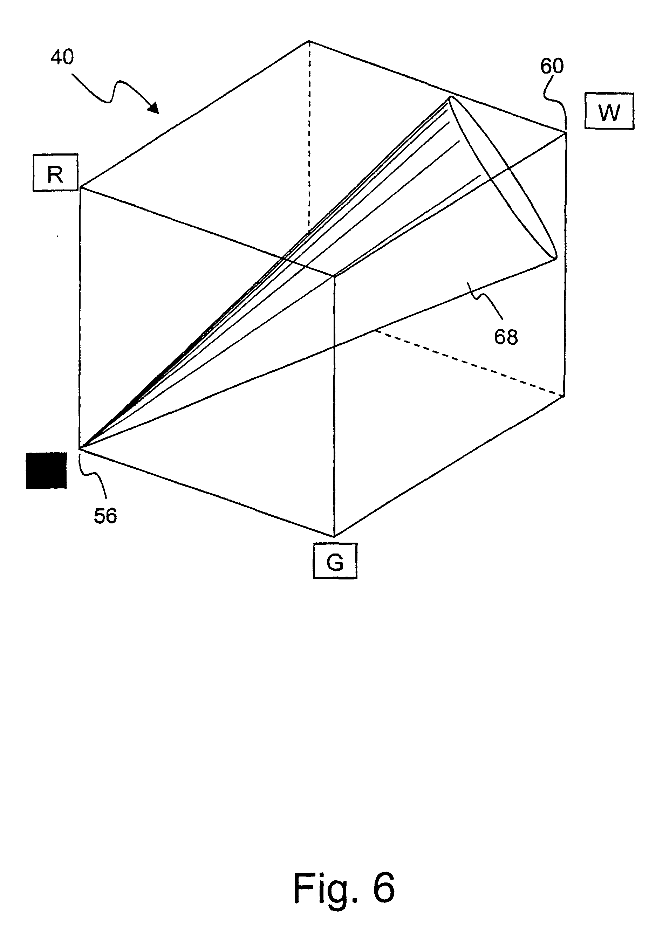

Fig. 6 zeigt einen Farbwürfel 40, in dem ein Kegelstumpf 68 konzentrisch zur Raumdiagonalen zwischen den Ecken 56 und 60 eingezeichnet ist, wobei die Spitze des Kegelstumpfes 68 mit der Ecke 56 zusammenfällt. Durch den Kegelstumpf 68 wird der Wertebereich einer Transformation wiedergegeben, bei dem die Sättigungsfaktoren $\alpha_R$, $\alpha_G$ und $\alpha_B$ eine Funktion der Helligkeit sind, so daß

$$\alpha_R = \alpha_R(L)$$

$$\alpha_G = \alpha_G(L)$$

$$\alpha_B = \alpha_B(L)$$

gilt. Durch die Einführung von helligkeitsabhängigen Sättigungsfaktoren sind die o.a. Transformationsgleichungn somit nicht mehr linear bezüglich des Helligkeitssignals L.

Bei dem in Fig. 6 dargestellten Ausführungsbeispiel ist der Zusammenhang zwischen den Sättigungsfaktoren $a_R$, $\alpha_G$ und $\alpha_B$ und der Helligkeit L linear, d.h.

$$\alpha_R = k_R \cdot L$$

$$\alpha_G = k_G \cdot L$$

$$\alpha_B = k_B \cdot L,$$

wobei $k_R$, $k_G$ und $k_B$ positive Proportionalitätskonstanten sind. Bei gleichen Proportionalitätskonstanten $k_R$, $k_G$ und $k_B$ ist die Grundfläche des Kegelstumpfes eine Kreisfläche. Diese Transformation mit helligkeitsabhängigen Sättigungsfaktoren führt dazu, daß die Sättigung um so stärker erhöht wird, je größer die Helligkeit an dem betreffenden Bildpunkt ist. Bei kleinen Helligkeiten wird die Farbsättigung hingegen verringert und verschwindet schließlich vollständig für eine Helligkeit von L = 0. Diese Transformation führt in vielen Fällen zu einem besonders natürlichen Bildeindruck, da in dunklen Bildbereichen ohnehin kaum Farbunterschiede auszumachen sind und deswegen dort die Farbsättigung sogar verringert wird. Helle Bereiche wirken dagegen oft unnatürlich blaß, weswegen dort die Farbsättigung besonders stark angehoben wird.

Es versteht sich, daß die Figuren 4, 5 und 6 lediglich schematischen Charakter haben und die dort dargestellten Zylinder 64 und 66 sowie der Kegelstumpf 68 keine exakte Wiedergabe des Wertebereichs darstellen, den die transformierten Bildsignale haben. Insbesondere sind aus Darstellungsgründen die Grundflächen der Zylinder sowie des Kegelstumpfs innerhalb der Farbwürfel 40 gezeichnet. In Wirklichkeit jedoch liegen zumindest die Ecken 60 oder sich in der Nähe davon befindende Punkte innerhalb des Wertebereichs, da selbstverständlich sicherzustellen ist, daß auch die Farbe Weiß korrekt dargestellt wird. Umgekehrt kann natürlich der Wertebereich der transformierten Bildsignale auch nicht außerhalb der Farbwürfel 40 liegen. Bei der Progammierung der Transformation wird dem durch zusätzliche Normierungsfunktionen Rechnung getragen, die hier nicht im einzelnen aufgeführt zu werden brauchen.

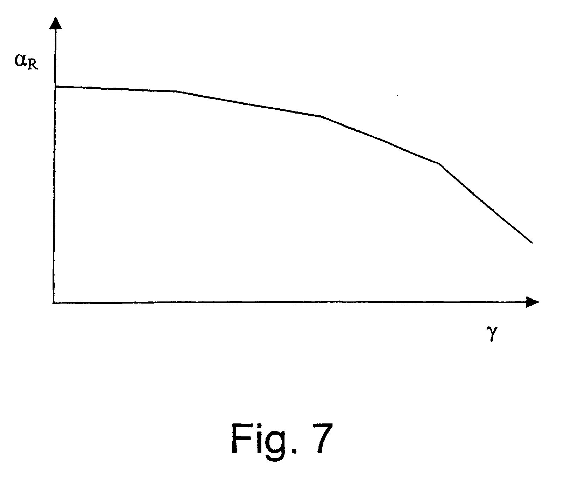

Die Sättigungsfaktoren $\alpha_R$, $\alpha_G$ und $\alpha_B$ können zusätzlich oder alternativ zu einer Abhängigkeit von den Helligkeitswerten L auch eine Abhängigkeit von dem Kontrastfaktor $\gamma$ aufweisen, mit dem das Gesamtsignal in dem Multiplikator 36 vor der Transformation multipliziert wird. In Fig. 7 ist ein Graph gezeigt, in dem beispielhaft der Sättigungsfaktor $\alpha_R$ für die Farbe Rot über dem Kontrastfaktor $\gamma$ aufgetragen ist. Der funktionale Zusammenhang zwischen diesen beiden Größen wird durch eine monoton fallende und stückweise lineare Funktion beschrieben. Der Kontrastfaktor $\gamma$, dessen Wert im allgemeinen vom darzustellenden Dynamikbereich des Bildes abhängt und sich deswegen von Bild zu Bild ändern kann, ist in der Regel um so größer, je kleiner der Dynamikbereich des aufgenommenen Bildes ist. Hohe Kontrastfaktoren $\gamma$ führen dazu, daß das Bild insgesamt an Kontrast gewinnt und dadurch auch die vom Betrachter empfundene Farbsättigung zunimmt. Dieser Tatsache wird dadurch Rechnung getragen, daß die Sättigungsfaktoren $\alpha_R$, $\alpha_G$ und $\alpha_B$ in der in Fig. 7 dargestellten Weise mit zunehmender Verstärkung kleiner werden. Eine stückweise lineare Funktion führt zu kürzeren Rechenzeiten, kann aber selbstverständlich ebenso durch einen anderen funktionalen Zusammenhang ersetzt werden.

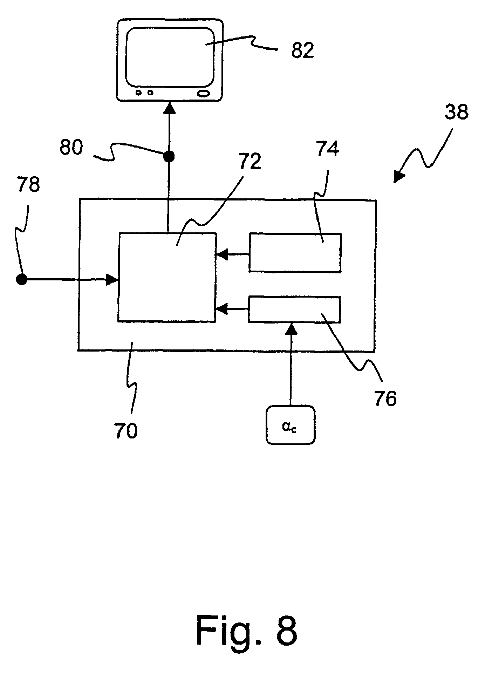

Fig. 8 zeigt in stark vereinfachter Weise den Aufbau eine Sättigungsstufe 38. Die Sättigungsstufe 38 ist als digitaler Signalprozessor 70 ausgeführt, der eine Recheneinheit 72 sowie einen frei programmierbaren ROM-Programmspeicher 74 umfaßt. In dem Programmspeicher 74 ist ein Computerprogramm gespeichert, welches die Durchführung der oben dargestellten Transformation in der Recheneinheit 72 steuert. Der digitale Signalprozessor 70 weist außerdem einen flüchtigen Speicher 76 auf, in dem von einer Bedienperson veränderbare Größen, z.B. Vorgaben hinsichtlich der gewünschten Farbsättigung, gespeichert werden können. Der digitale Signalprozessor 70 verfügt außerdem über einen Eingang 78, über den ein aufbereitetes, zu transformierendes Gesamtsignal zugeführt werden kann, sowie über einen Ausgang 80 zur Ausgabe der transformierten Bildsignale, z.B. an einen Bildschirm 82 oder einen Bildspeicher.

Es versteht sich, daß die Sättigungsstufe 38 auch auf andere Weise realisiert sein kann. Sie kann sich z.B. auch außerhalb einer digitalen Kamera befinden und dann etwa als Personalcomputer ausgeführt sein, in den ein Programm zur elektronischen Bildverarbeitung geladen ist, welches die Durchführung der oben erörterten Transformation durch den Prozessor des Personalcomputers steuert. Darüber hinaus kann die Sättigungsstufe auch als digitale oder analoge elektronische Schaltung realisiert sein.

**Patentansprüche**

1. Verfahren zur Transformation von durch farbliche Filterung gewonnenen und logarithmisch komprimierten Bildsignalen, bei dem die Farbsättigung der aufgenommenen Bilder verändert wird, **dadurch gekennzeichnet, daß** zumindest für eine Spektralfarbe die transformierten Bildsignale als Funktion der logarithmisch komprimierten Bildsignale und logarithmisch komprimierter Helligkeitssignale ermittelt werden.

2. Verfahren nach Anspruch 1, **dadurch gekennzeichnet, daß** das logarithmisch komprimierte Helligkeitssignal für einen einzelnen Bildpunkt gleich dem arithmetischen Mittel der unterschiedlichen Spektralfarben zugeordneten logarithmisch komprimierten Bildsignale des betreffendes Bildpunktes ist.

3. Verfahren nach einem der Ansprüche 1 oder 2, **dadurch gekennzeichnet, daß** die transformierten Bildsignale $L_c'$ aus den Bildsignalen $L_c$ für die zumindest eine Spektralfarbe c nach der Gleichung

$$L_c' = \alpha_c \cdot (L_c - L) + L$$

bestimmt werden, wobei $\alpha_c$ ein Sättigungsfaktor für die Spektralfarbe c und L ein logarithmisch komprimiertes Helligkeitssignal ist.

4. Verfahren nach Anspruch 3, **dadurch gekennzeichnet, daß** die Sättigungsfaktoren $\alpha_c$ abhängig sind von einem Kontrastfaktor $\gamma$, mit dem die logarithmisch komprimierten Bildsignale vor der Transformation im Rahmen einer $\gamma$-Korrektur multipliziert werden.

5. Verfahren nach Anspruch 4, **dadurch gekennzeichnet, daß** die Sättigungsfaktoren $\alpha_c$ mit zunehmendem Kontrastfaktor $\gamma$ abnehmen.

6. Verfahren nach Anspruch 5, **dadurch gekennzeichnet, daß** der Zusammenhang zwischen den Sättigungsfaktoren $\alpha_c$ und dem Kontrastfaktor $\gamma$ durch eine stückweise lineare und monoton fallende Funktion beschrieben wird.

7. Verfahren nach einem der Ansprüche 3 bis 6, **dadurch gekennzeichnet, daß** die Sättigungsfaktoren $\alpha_c$ abhängig sind von den logarithmisch komprimierten Helligkeitssignalen.

8. Verfahren nach Anspruch 7, **dadurch gekennzeichnet, daß** die Sättigungsfaktoren $\alpha_c$ proportional zu den logarithmisch komprimierten Helligkeitssignalen sind.

9. Sättigungsstufe zur Veränderung der Farbsättigung von Bildern, mit der durch farbliche Filterung gewonnene und logarithmisch komprimierte Bildsignale transformierbar sind, **gekennzeichnet durch** Rechenmittel (70), mit denen für zumindest eine Spektralfarbe die transformierten Bildsignale als Funktion der logarithmisch komprimierten Bildsignale und logarithmisch komprimierter Helligkeitssignale ermittelbar sind.

10. Sättigungsstufe nach Anspruch 9, **dadurch gekennzeichnet, daß** die Rechenmittel einen digitalen Signalprozessor (70) umfassen, der digitalisierte Bildsignale nach vorgegebenen Transformationsgleichungen verarbeitet.

11. Sättigungsstufe nach Anspruch 10, **dadurch gekennzeichnet, daß** der digitale Signalprozessor (70) derart programmiert ist, daß die transformierten Bildsignale $L_c'$ aus den Bildsignalen $L_c$ für die zumindest eine Spektralfarbe c nach der Gleichung

$$L_c' = \alpha_c \cdot (L_c - L) + L$$

bestimmt werden, wobei $\alpha_c$ ein Sättigungsfaktor für die Spektralfarbe c und L ein logarithmisch komprimiertes Helligkeitssignal ist.

12. Digitale Kamera, insbesondere Photo- oder Filmkamera (10), mit einem elektronischen Bildaufnehmer (12), der logarithmisch komprimierte Bildsignale erzeugt, **dadurch gekennzeichnet, daß** die Kamera eine Sättigungsstufe (38) zur Veränderung der Farbsättigung aufgenommener Bilder nach einem der Ansprüche 9 bis 11 aufweist.

**Claims**

1. Method for transformation of image signals that have been obtained by color filtering and have been logarithmically compressed, in which the color saturation of the recorded images is modified, **characterized in that** the transformed image signals are determined as a function of the logarithmically compressed image signals and logarithmically compressed brightness signals at least for one spectral color.

2. Method according to Claim 1, **characterized in that** the logarithmically compressed brightness signal for an individual pixel is equal to the arithmetic mean of the logarithmically compressed image signals of the relevant pixel which are assigned to the different spectral colors.

3. Method according to either of Claims 1 and 2, **characterized in that** the transformed image signals $L'_c$ are determined from the image signals $L_c$ for the at least one spectral color c according to the equation

$$L_c' = \alpha_c \cdot (L_c - L) + L$$

where $\alpha_c$ is a saturation factor for the spectral color c and L is a logarithmically compressed brightness signal.

4. Method according to Claim 3, **characterized in that** the saturation factors $\alpha_c$ are dependent on a contrast factor $\gamma$ by which the logarithmically compressed image signals are multiplied before the transformation in the context of a $\gamma$ correction.

5. Method according to Claim 4, **characterized in that** the saturation factors $\alpha_c$ decrease as the contrast factor $\gamma$ increases.

6. Method according to Claim 5, **characterized in that** the relationship between the saturation factors $\alpha_c$ and the contrast factor $\gamma$ is described by a piecewise linear and monotonically falling function.

7. Method according to any of Claims 3 to 6, **characterized in that** the saturation factors $\alpha_c$ are dependent on the logarithmically compressed brightness signals.

8. Method according to Claim 7, **characterized in that** the saturation factors $\alpha_c$ are proportional to the logarithmically compressed brightness signals.

9. Saturation stage for modifying the color saturation of images, with which image signals that have been obtained by color filtering and have been logarithmically compressed can be transformed, **characterized by** computing means (70), with which the transformed image signals can be determined as a function of the logarithmically compressed image signals and logarithmically compressed brightness signals for at least one spectral color.

10. Saturation stage according to Claim 9, **characterized in that** the computing means comprise a digital signal processor (70), which processes digitized image signals according to predetermined transformation equations.

11. Saturation stage according to Claim 10, **characterized in that** the digital signal processor (70) is programmed in such a way that the transformed image signals $L'_c$ are determined from the image signals $L_c$ for the at least one spectral color c according to the equation

$$L_c' = \alpha_c \cdot (L_c - L) + L$$

where $\alpha_c$ is a saturation factor for the spectral color c and L is a logarithmically compressed brightness signal.

12. Digital camera, in particular photographic or film camera (10), having an electronic image recorder (12), which generates logarithmically compressed image signals, **characterized in that** the camera comprises a saturation stage (38) for modifying the color saturation of recorded images according to any of Claims 9 to 11.

**Revendications**

1. Procédé pour transformer des signaux d'image obtenus par filtrage couleur et comprimés de manière logarithmique, dans lequel on modifie la saturation en couleurs des images prises, **caractérisé en ce que** pour une couleur spectrale au moins on détermine les signaux d'image transformés en tant que fonction des signaux d'image comprimés de manière logarithmique et de signaux de luminosité comprimés de manière logarithmique.

2. Procédé selon la revendication 1, **caractérisé en ce que** le signal de luminosité comprimé de manière logarithmique pour un point d'image individuel est égal à la moyenne arithmétique des signaux d'image comprimés de manière logarithmique associés aux différentes couleurs spectrales, du point d'image concerné.

3. Procédé selon l'une des revendications 1 ou 2, **caractérisé en ce que** les signaux d'image transformés $L'_c$ sont déterminés à partir des signaux d'image $L_c$ pour la ou les couleur(s) spectrale(s) c suivant l'équation

$$L'_c = \alpha_C \cdot (L_C - L) + L,$$

$\alpha_c$ étant un facteur de saturation pour la couleur spectrale c et L un signal de luminosité comprimé de manière logarithmique.

4. Procédé selon la revendication 3, **caractérisé en ce que** les facteurs de saturation $\alpha_c$ dépendent d'un facteur de contraste $\gamma$ par lequel les signaux d'image comprimés de manière logarithmique sont multipliés avant la transformation dans le cadre d'une correction $\gamma$.

5. Procédé selon la revendication 4, **caractérisé en ce que** les facteurs de saturation $\alpha_c$ diminuent lorsque le facteur de contraste $\gamma$ augmente.

6. Procédé selon la revendication 5, **caractérisé en ce que** la relation entre les facteurs de saturation $\alpha_c$ et le facteur de contraste $\gamma$ est décrite par une fonction en partie linéaire et décroissante de manière monotone.

7. Procédé selon l'une des revendications 3 à 6, **caractérisé en ce que** les facteurs de saturation $\alpha_C$ dépendent des signaux de luminosité comprimés de manière logarithmique.

8. Procédé selon la revendication 7, **caractérisé en ce que** les facteurs de saturation $\alpha_C$ sont proportionnels aux signaux de luminosité comprimés de manière logarithmique.

9. Etage de saturation pour modifier la saturation en couleurs d'images, par lequel des signaux d'image obtenus par filtrage couleur et comprimés de manière logarithmique peuvent être transformés, **caractérisé par** des moyens de calcul (70) par lesquels pour au moins une couleur spectrale, les signaux d'image transformés peuvent être déterminés en tant que fonction des signaux d'image comprimés de manière logarithmique et de signaux de luminosité comprimés de manière logarithmique.

10. Etage de saturation selon la revendication 9, **caractérisé en ce que** les moyens de calcul comprennent un processeur numérique de signaux (70) qui traite des signaux d'image numérisés selon des équations de transformation prédéfinies.

11. Etage de saturation selon la revendication 10, **caractérisé en ce que** le processeur numérique de signaux (70) est programmé de manière que les signaux d'image transformés L'$_c$ sont déterminés à partir des signaux d'image L$_c$ pour la ou les couleur(s) spectrale(s) c suivant l'équation

$$L'_c = \alpha_C \cdot (L_C - L) + L,$$

$\alpha_c$ étant un facteur de saturation pour la couleur spectrale c et L un signal de luminosité comprimé de manière logarithmique.

12. Appareil de prise de vues numérique, en particulier appareil photo ou caméra (10), comportant un dispositif électronique de prise de vues (12) qui produit des signaux d'image comprimés de manière logarithmique, **caractérisé en ce que** l'appareil de prise de vues comporte un étage de saturation (38) pour modifier la saturation en couleurs des prises de vues selon l'une des revendications 9 à 11.

# Fig. 1

# Fig. 2

Fig. 3

Fig. 4

# Fig. 5

Fig. 6

Fig. 7

Fig. 8